# EUROPÄISCHE PATENTSCHRIFT

(11) **EP 0 511 473 B1**
(45) Veröffentlichungstag und Bekanntmachung des Hinweises auf die Patenterteilung: **11.06.1997**
(21) Anmeldenummer: 92103628.1
(22) Anmeldetag: 03.03.1992
(51) Int. Cl.: B60K 28/16, B60T 8/32

(54) **Verfahren zur Antriebsschlupfregelung**
Process for controlling drive slip
Procédé de régulation du glissement à l'entraînement

(30) Priorität: 13.04.1991 DE 4112141
(43) Veröffentlichungstag der Anmeldung: 04.11.1992
(73) Patentinhaber: ROBERT BOSCH GMBH, 70442 Stuttgart (DE)
(72) Erfinder: Schramm, Herbert, Dr.-Ing., W-7250 Leonberg 6 (DE)

(56) Entgegenhaltungen:
- DE-A- 3 605 600
- DE-A- 3 622 479
- GB-A- 2 189 301
- US-A- 3 899 048
- AUTOMOBILTECHNISCHE ZEITSCHRIFT, Bd.90, Nr.2, 1988, STUTTGART, DE W. MAISCH, W-D. JONNER, A. SIGL 'DIE ANTRIEBSSCHLUPFREGELUNG ASR- EINE KONSEQUENTE ERWEITERUNG DES ABS'

## Beschreibung

### Stand der Technik

Die Erfindung betrifft ein Verfahren zur Antriebsschlupfregelung mit den Merkmalen des Oberbegriffs des Anspruchs 1. Ein derartiges Verfahren ist z.B. aus der DE-A1 31 27 302 bekannt.

Dreht beim Anfahren eines derart ausgerüsteten Fahrzeugs nur ein Rad durch, greift der Bremsregler automatisch ein. Der Bremsdruck wird aufgebaut und das entstehende Bremsmoment wird am andern - noch stehenden Rad - als Antriebsmoment wirksam. Nun dreht auf homogenem Reibwert auch dieses durch. Es entsteht meist ein störendes Schlupfpendeln zwischen rechts/links. Auf jeden Fall wird der Untergrund am Standort des Fahrzeugs unter beiden Rädern poliert. Es entsteht dadurch fast schlagartig ein niedrigeres µ als eigentlich auf der Straße vorhanden ist.

In gleicher Weise wird der Untergrund poliert, wenn beide Räder gleichzeitig durchdrehen, obwohl der Motorregler sehr schnell reagiert.

Aus der Veröffentlichung 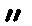 Die Antriebsschlupfregelung ASR - eine konsequente Erweiterung des ABS -, in Automobiltechnische Zeitschrift, Band 90, Nr. 2, 1988, Seite 57 bis 61 ist eine Antriebsschlupfregelung bekannt, welche durch Abbremsen eines Rades oder beider Antriebsräder eine reine Anfahrhilfe bereitstellt. Hinweise auf die obengenannte Problemstellung beim Anfahrvorgang und auf die im Patentanspruch 1 definierte Lösung werden nicht gegeben.

Die DE-A1 36 22 479 beschreibt eine Anfahrhilfe für Kraftfahrzeuge, bei der der Fahrer über die Handbremse selektiv Bremskraft an einem durchdrehenden Antriebsrad aufbringen kann. Wie auch das US-Patent 3,899,048, in welchem zur Verbesserung des Anfahrvorgangs die Erhöhung der Bremskraft an durchdrehenden Rädern vorgeschlagen wird, beschreibt auch dieser Stand der Technik keine Lösungen für die oben beschriebene Problemstellung.

Es ist Aufgabe der Erfindung, Maßnahmen anzugeben, die das Anfahren eines Kraftfahrzeugs im Hinblick auf Schlupfpendeln zwischen rechten und linkem Antriebsrad und/oder im Hinblick auf eine Polierung des Untergrunds verbessern.

Dies wird durch die kennzeichnenden Merkmale des unabhängigen Patentanspruchs erreicht.

### Vorteile der Erfindung

Der Kern der Erfindung besteht darin, vor dem Anfahren ein Rad mit Bremsdruck zu beaufschlagen. Ist dann die Kupplung vom Fahrer ganz eingedrückt, so dreht das andere Rad durch. Es bringt auf niedrigem µ keine große Vortriebskraft, da der Untergrund poliert wird. Das angebremste Rad bleibt aber stehen, bis der Motorregler die Einspritzpumpe oder die Drosselklappe auf Leerlauf gestellt hat. Damit wird der Untergrund unter diesem Rad nicht poliert und kann deshalb eine relativ hohe Antriebskraft auf den Boden übertragen. Jetzt wird an diesem Rad langsam der Bremsdruck abgelassen und das Rad freigegeben. Insgesamt erhält man eine größere Vortriebskraft als im Falle des Durchdrehens beider Räder.

Es wird also das störende Polieren an einem Antriebsrad vermieden und die Vortriebskraft vergrößert.

### Figurenbeschreibung

Anhand der Zeichnung wird ein Ausführungsbeispiel in Blockschaltbilddarstellung beschrieben. Die Steuerung und Regelung könnte natürlich auch durch einen Rechner erfolgen.

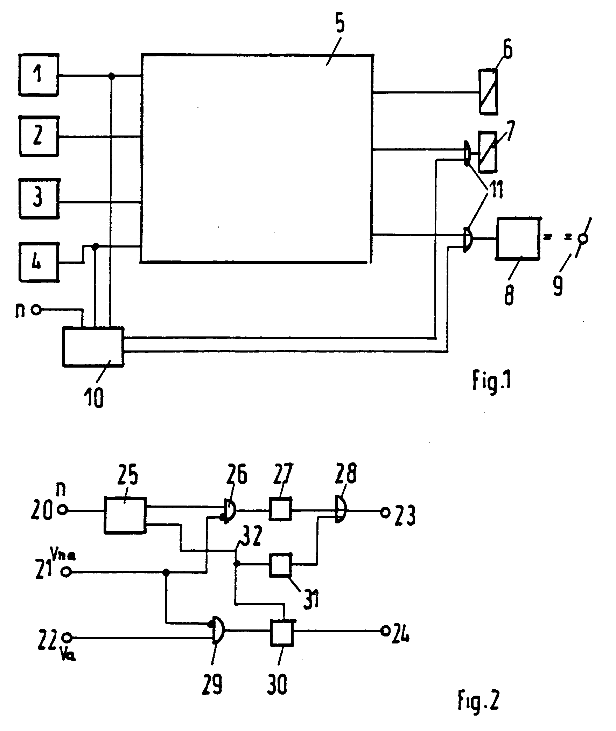

In Fig. 1 sind die den angetriebenen Rädern zugeordneten Geschwindigkeitssensoren mit 1 und 2, die den nichtangetriebenen Rädern zugeordneten Sensoren mit 3 und 4 bezeichnet. Deren Signale werden in einem Steuergerät 5 verarbeitet und es werden im Falle des Durchdrehens eines Rads das zugehörige Ventil 6 oder 7 zur Druckvariation angesteuert und es wird im Falle des Durchdrehens beider Räder ein Stellglied 8 angesteuert, das das Motormoment beeinflußt, was hier beispielhaft als Verstellung der Drosselklappe 9 dargestellt ist.

Um das oben erläuterte Losfahrproblem zu lösen, ist ein Block 10 vorgesehen, dem das Geschwindigkeitssignal Vₐ des Sensors 1 eines Antriebsrads zugeführt wird, das im Stand nicht mit Druck beaufschlagt wird, und dem weiterhin das Geschwindigkeitssignal Vₙₐ eines nicht angetriebenen Rads (vom Sensor 4) und das Tachosignal n zugeführt wird. Der Block 10 erzeugt zusätzliche Steuersignale für das Ventil 7 (dem der Sensor 2 zugeordnet ist) und für das Stellglied 8, die über Oder-Gatter 11 eingekoppelt werden.

Fig. 2 zeigt ein Ausführungsbeispiel für den Block 10. An den Eingangsklemmen 20 bis 22 werden die Eingangssignale n, Vₐ und Vₙₐ zugeführt. Über die Klemme 23 werden die Ansteuersignale für das Ventil 7 und über die Klemme 24 das Ansteuersignal für das Stellglied 8 abgegeben. Ein Vergleicher 25 gibt ein Signal auf seiner oberen Ausgangsleitung ab, wenn der Motor dreht (n > 0). Ist dieses Signal vorhanden, jedoch ein Signal des nicht angetriebenen Rads nicht vorhanden (Fahrzeug steht), so gibt ein Und-Gatter 26 ein Signal auf ein monostabiles Glied 27, das für eine vorgegebene Zeit ein Signal über ein Oder-Gatter 28 zum Ventil 7 liefert. Das Ventil 7 ist ein 3/3-Ventil und das Signal des Glieds 27 ist so bemessen, daß das Ventil 7 für eine Zeit in seine Druckaufbaustellung gesteuert wird. Es wird also an der Bremse dieses Rads Druck aufgebaut.

Wird nun vom Fahrer der Gang eingelegt und die Kupplung freigegeben, so wird das dem Ventil 6 zugeordnete Rad durchdrehen. Dies wird durch ein Und-Gatter 29 erkannt, das ein bistabiles Glied 30 setzt. Dessen Ausgangssignal stellt das Motormoment zurück. Wird die Leerlaufdrehzahl nₗ erreicht, dann wird einmal vom Block 25 über eine Leitung 32 das bistabile Glied 30 rück- und gleichzeitig ein Impulsgenerator 31 in Betrieb gesetzt, der schrittweise den eingesteuerten Druck abbaut (und in einem nicht dargestellten Anwendungsfall schrittweise das Motormoment erhöht), so daß das Fahrzeug anfährt.

## Patentansprüche

1. Verfahren zur Antriebsschlupfregelung für ein Kraftfahrzeug mit einem Bremsregler (in 5), der die Antriebsräder synchronisiert und/oder die Geschwindigkeit (Va) der Antriebsräder auf die Geschwindigkeit (Vna) der nicht angetriebenen Räder plus Antriebsschlupf regelt und mit einem Motorregler (in 5), der beim Durchdrehen eines oder beider Antriebsräder das Motormoment verkleinert, dadurch gekennzeichnet,
- daß vor dem Anfahren des Fahrzeugs ein angetriebenes Rad mit Bremsdruck beaufschlagt wird,
- daß bei Durchdrehen des nicht gebremsten Antriebsrades der Motorregler das Motormoment zurückstellt
- und daß dann der eingesteuerte Bremsdruck schrittweise abgebaut wird, so daß das Fahrzeug anfährt.

2. Verfahren nach Anspruch 1, dadurch gekennzeichnet, daß bei Fahrzeugen mit vier Antriebsrädern ein Teil der Antriebsräder vorab gebremst werden.

## Claims

1. Method for drive-slip control for a motor vehicle with a brake controller (in 5) which synchronizes the driving wheels and/or adjusts the speed (Va) of the driving wheels to the speed (Vna) of the non-driven wheels plus the drive slip, and with a engine controller (in 5) which reduces the engine torque when one or both driving wheels spins, characterized in that
- before the vehicle drives away, one driven wheel is supplied with brake pressure,
- that, if the unbraked driving wheel spins, the engine controller reduces the engine torque
- and that the brake pressure fed in is then reduced in steps, so that the vehicle drives away.

2. Method according to Claim 1, characterized in that, in the case of vehicles with four driving wheels, a number of the driving wheels are braked beforehand.

## Revendications

1. Procédé de régulation antipatinage pour un véhicule, avec un régulateur de freinage (en 5), qui synchronise les roues motrices et/ou qui règle la vitesse (Vₐ) des roues motrices sur la vitesse (Vₙₐ) des roues non motrices plus le glissement à l'entraînement et avec un régulateur de moteur (en 5), qui en cas de patinage d'une roue motrice ou des deux roues motrices réduit le couple moteur,
caractérisé en ce que
avant le démarrage du véhicule, on applique sur une roue motrice la pression de freinage,
en cas de patinage de la roue motrice non freinée, la régulation du moteur rétablit le couple moteur,
et ensuite on réduit pas à pas la pression de freinage, de telle sorte que le véhicule démarre.

2. Procédé selon la revendication 1,
caractérisé en ce que
dans le cas de véhicules avec quatre roues motrices, on freine auparavant une partie des roues motrices.
